# EUROPEAN PATENT APPLICATION

(11) **EP 4 694 314 A1**
(43) Date of publication of application: **11.02.2026**
(21) Application number: 23929088.5
(22) Date of filing: 24.03.2023
(51) Int. Cl.: H04W 28/08

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN); WU, Jinhua, Beijing 100085 (CN); LIU, Xiaofei, Beijing 100085 (CN)
(74) Representative: Dehns Germany Partnerschaft mbB
(86) International application number: PCT/CN2023/083861
(87) International publication number: WO 2024/197485

(57) **Abstract**

Provided in the embodiments of the present disclosure are an information processing method and apparatus, and a communication device and a storage medium. The information processing method is executed by a first core network element and comprises: sending first data according to the relevance of the first data.

## Description

### FIELD

The present disclosure relates to the field of wireless communication technologies, and in particular relates to a method and an apparatus for processing information, a communication device and a storage medium.

### BACKGROUND

At present, in the field of wireless communication technologies, a communication device may send a data packet set. For example, a core network element may send the data packet set. A base station needs treat data packets in the data packet set as a whole. If some data packets in the data packet set are not successfully sent, it means that other data packets in the data packet set do not need to continue to be sent. In a case of changing the base station, if some data packets in the data packet set are sent at the original base station and other data packets are sent at a new base station, it is required to determine an association relationship between the some data packets and the other data packets, resulting in increased burden between the base stations.

### SUMMARY

Embodiments of the present disclosure provide a method and an apparatus for processing information, a communication device and a storage medium.

According to a first aspect of embodiments of the present disclosure, there is provided a method for processing information. The method is performed by a first core network element, and includes:
sending a first data according to a dependency of the first data.
In some embodiments, the first data includes at least one of:
at least one data packet; or
at least one data packet set, in which each of the at least one data packet set includes one or more data packets.

In some embodiments, the dependency of the first data includes at least one of:
an inter data packet dependency of the first data;
an intra data packet dependency of the at least one data packet set of the first data; or
an inter data packet set dependency of the first data.

In some embodiments, sending the first data according to the dependency of the first data includes one of:
sending data packets and/or data packet sets having the dependency of the first data to a same access network element or a second core network element; or
sending, according to some data packets in the first data received by the first core network element, the some data packets to a second core network element, in which the second core network element is a corresponding network element after a change of the first core network element.

In some embodiments, the method further includes:
sending data packets and/or data packet sets not having the dependency of the first data to different second core network elements or access network elements.

In some embodiments, sending the data packets and/or the data packet sets having the dependency of the first data to the same access network element includes:
sending, according to a change of the access network element, the data packets and/or the data packet sets having the dependency of the first data to a same changed access network element.

In some embodiments, the change of the access network element includes one of:
switching the access network element from a first base station to a second base station;
changing a bearer type of the access network element;
adding a secondary base station or changing a secondary base station; or
changing a logical node of a packet data convergence protocol (PDCP) corresponding to the access network element.

In some embodiments, the first data includes the at least one data packet set, and sending the data packets and/or the data packet sets having the dependency of the first data to the same access network element includes:
sending all data packets in one of the at least one data packet set to the same access network element in response to a protocol data unit (PDU) set integrated handling indication (PSIHI) of the data packet set in the first data being a first value.

In some embodiments, after sending the first data according to the first data dependency, the method further includes:
sending at least one end identifier to the second core network element or the access network element, in which the least one end identifier indicates that the data packets and/or the data packet sets having the dependency of the first data have been sent.

In some embodiments, before sending the at least one end identifier to the second core network element or the access network element, the method further includes:
receiving indication information sent by a base station, in which the indication information indicates that an access network element accessed by a user equipment (UE) has been changed.

In some embodiments, the method further includes: sending notification information to the access network element, in which the notification information indicates that the first core network element has a capability of supporting sending the first data according to the dependency of the first data.

In some embodiments, the first core network element includes one of: a user plane function (UPF) or a session management function (SMF).

In some embodiments, the second core network element includes one of: a UPF or an SMF; and/or the access network element is a base station.

According to a second aspect of embodiments of the present disclosure, there is provided a method for processing information. The method is performed by an access network element, and includes:
receiving a first data sent by a first core network element according to a dependency of the first data.

In some embodiments, the first data includes at least one of:
at least one data packet; or
at least one data packet set, in which each of the at least one data packet set includes one or more data packets.

In some embodiments, the dependency of the first data includes at least one of:
an inter data packet dependency of the first data;
an intra data packet dependency of the at least one data packet set of the first data; or
an inter data packet set dependency of the first data.

In some embodiments, receiving the first data sent by the first core network element according to the dependency of the first data includes:
receiving data packets and/or data packet sets having the dependency of the first data sent by the first core network element.

In some embodiments, the first data having the dependency is sent by the first core network element according to a change of the access network element.

In some embodiments, the change of the access network element includes one of:
switching the access network element from a first base station to a second base station;
changing a bearer type of the access network element;
adding a secondary base station or changing a secondary base station; or
changing a logical node of a packet data convergence protocol (PDCP) corresponding to the access network element.

In some embodiments, the method further includes: receiving at least one end identifier sent by the first core network element, in which the least one end identifier indicates that the data packets and/or the data packet sets having the dependency of the first data have been sent.

In some embodiments, the method further includes: receiving notification information sent by the first core network element, in which the notification information indicates that the first core network element has a capability of supporting sending the first data according to the dependency of the first data.

In some embodiments, the first core network element includes one of: a UPF or an SMF; and/or the access network element is a base station.

According to a third aspect of embodiments of the present disclosure, there is provided a method for processing information, performed by a second core network element, including:
receiving a first data sent by a first core network element according to a dependency of the first data.

In some embodiments, the method further includes: receiving at least one end identifier sent by the first core network element, in which the least one end identifier indicates that the data packets and/or the data packet sets having the dependency of the first data have been sent.

According to a fourth aspect of embodiments of the present disclosure, there is provided an apparatus for processing information, including:
a sending module configured to send a first data according to a dependency of the first data.

In some embodiments, the first data includes at least one of:
at least one data packet; or
at least one data packet set, in which each of the at least one data packet set includes one or more data packets.

In some embodiments, the dependency of the first data includes at least one of:
an inter data packet dependency of the first data;
an intra data packet dependency of the at least one data packet set of the first data; or
an inter data packet set dependency of the first data.

In some embodiments, the sending module is configured to send data packets and/or data packet sets having the dependency of the first data to a same access network element or a second core network element; or
the sending module is configured to send data packets and/or data packet sets having the dependency of the first data to a same access network element or a second core network element.

In some embodiments, the sending module is configured to send data packets and/or data packet sets not having the dependency of the first data to different second core network elements or access network elements.

In some embodiments, the sending module is configured to send, according to a change of the access network element, the data packets and/or the data packet sets having the dependency of the first data to a same changed access network element.

In some embodiments, the change of the access network element includes one of:
switching the access network element from a first base station to a second base station;
changing a bearer type of the access network element;
adding a secondary base station or changing a secondary base station; or
changing a logical node of a PDCP corresponding to the access network element.

In some embodiments, the sending module is configured to send all data packets in one of the at least one data packet set to the same access network element in response to a PSIHI of the data packet set in the first data being a first value.

In some embodiments, the sending module is configured to send at least one end identifier to the second core network element or the access network element, in which the least one end identifier indicates that the data packets and/or the data packet sets having the dependency of the first data have been sent.

In some embodiments, a first receiving module is configured to receive indication information sent by a base station, in which the indication information indicates that an access network element accessed by a UE has been changed.

In some embodiments, the sending module is configured to send notification information to the access network element, in which the notification information indicates that the first core network element has a capability of supporting sending the first data according to the dependency of the first data.

In some embodiments, the first core network element includes one of: a UPF or a SMF.

In some embodiments, the second core network element includes one of: a UPF or an SMF; and/or the access network element is a base station.

According to a fifth aspect of embodiments of the present disclosure, there is provided an apparatus for processing information, including:
a second receiving module configured to receive a first data sent by a first core network element according to a dependency of the first data.

In some embodiments, the first data includes at least one of:
at least one data packet; or
at least one data packet set, in which each of the at least one data packet set includes one or more data packets.

In some embodiments, the dependency of the first data includes at least one of:
an inter data packet dependency of the first data;
an intra data packet dependency of the at least one data packet set of the first data; or
an inter data packet set dependency of the first data.

In some embodiments, the second receiving module is configured to receive data packets and/or data packet sets having the dependency of the first data sent by the first core network element.

In some embodiments, the first data having the dependency is sent by the first core network element according to a change of the access network element.

In some embodiments, the change of the access network element includes one of:
switching the access network element from a first base station to a second base station;
changing a bearer type of the access network element;
adding a secondary base station or changing a secondary base station; or
changing a logical node of a PDCP corresponding to the access network element.

In some embodiments, the second receiving module is configured to receive at least one end identifier sent by the first core network element, in which the least one end identifier indicates that the data packets and/or the data packet sets having the dependency of the first data have been sent.

In some embodiments, the second receiving module is configured to receive notification information sent by the first core network element, in which the notification information indicates that the first core network element has a capability of supporting sending the first data according to the dependency of the first data.

In some embodiments, the first core network element includes one of: a UPF or an SMF; and/or the access network element is a base station.

According to a sixth aspect of embodiments of the present disclosure, there is provided a system for processing information, including:
a first core network element configured to send a first data according to a dependency of the first data; and
an access network element configured to receive the first data.

According to a seventh aspect of embodiments of the present disclosure, there is provided a system for processing information, including:
a first core network element configured to send a first data according to a dependency of the first data; and
a second core network element configured to receive the first data.

According to an eighth aspect of embodiments of the present disclosure, there is provided a communication device, including:
a transceiver;
a memory; and
executable programs stored in the memory and capable of being run by a processor, in which the processor executes the method for processing information provided in the first aspect or the second aspect or the third aspect when running the executable programs.

According to a ninth aspect of embodiments of the present disclosure, there is provided a computer storage medium having stored therein executable programs that, when executed by a processor, cause the method for processing information provided in the first aspect or the second aspect or the third aspect to be implemented.

The technical solution provided in the embodiments of the present disclosure may include the following beneficial effects:

In the embodiments of the present disclosure, the first core network element sends the first data according to the dependency of the first data, such that the first core network element sends the first data having the dependency, that is, sends the complete data packet and/or the data packet set. In this way, in a case where the communication device such as the base station or other core network element receives the first data, it is not required to receive information about the dependency of the data packet and/or the data packet set in the first data, thereby greatly reducing the burden of the communication device such as the base station or other core network element.

It is to be understood that both the foregoing general description and the following detailed descriptions are illustrative and explanatory only and are not restrictive of the embodiments of the present disclosure.

### BRIEF DESCRIPTION OF THE DRAWINGS

The accompanying drawings, which are incorporated in and constitute a part of the description, illustrate embodiments consistent with the present disclosure and, together with the description, serve to explain the principles of the present disclosure.
FIG. 1 is a schematic diagram illustrating a wireless communication system according to an example embodiment.
FIG. 2 is a flow chart illustrating a method for processing information according to an example embodiment.
FIG. 3 is a flow chart illustrating a method for processing information according to an example embodiment.
FIG. 4 is a flow chart illustrating a method for processing information according to an example embodiment.
FIG. 5 is a flow chart illustrating a method for processing information according to an example embodiment.
FIG. 6 is a flow chart illustrating a method for processing information according to an example embodiment.
FIG. 7 is a flow chart illustrating a method for processing information according to an example embodiment.
FIG. 8 is a flow chart illustrating a method for processing information according to an example embodiment.
FIG. 9 is a flow chart illustrating a method for processing information according to an example embodiment.
FIG. 10 is a flow chart illustrating a method for processing information according to an example embodiment.
FIG. 11 is a block diagram illustrating an apparatus for processing information according to an example embodiment.
FIG. 12 is a block diagram illustrating an apparatus for processing information according to an example embodiment.
FIG. 13 is a block diagram illustrating an apparatus for processing information according to an example embodiment.
FIG. 14 is a block diagram illustrating a UE according to an example embodiment.
FIG. 15 is a block diagram illustrating a communication device according to an example embodiment.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the present disclosure. Instead, they are merely examples of apparatuses and methods consistent with aspects related to embodiments of the present disclosure.

Terms used herein in embodiments of the present disclosure are only for the purpose of describing specific embodiments, but should not be construed to limit embodiments of the present disclosure. As used in the embodiments of the present disclosure, "a/an", "said" and "the" in singular forms are intended to include plural forms, unless clearly indicated in the context otherwise. It should also be understood that, the term "and/or" used herein represents and contains any or all possible combinations of one or more associated listed items. The term "a plurality" in embodiments of the present disclosure refers to two or more. The prefix words such as "first" and "second" in the embodiments of the present disclosure are only for distinguishing different description objects, and do not constitute a limitation on the position, order, priority, quantity, content and the like of the description objects. Regarding the observations of the description objects, please refer to the description of the context in the claims or the embodiments, and should not constitute unnecessary restrictions due to the use of prefix numbers. For example, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining that" depending on the context. In some embodiments, the name of information or the like is not limited to the name described in the embodiments, and the terms such as "information", "message", "signaling", "report", "indication", "configuration", and "data" may be replaced with each other.

In some embodiments of the present disclosure, the terms such as "obtaining", "acquiring", "receiving", and "transmitting (sending and/or receiving)" may be replaced with each other, and may be interpreted as receiving from other subjects, obtaining from a protocol, obtaining by itself and the like.

In some embodiments of the present disclosure, the terms such as "sending", "reporting", "issuing", and "transmitting (sending and/or receiving)" may be replaced with each other.

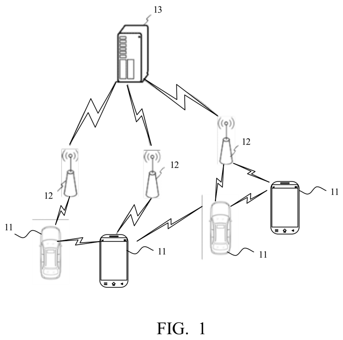

Reference is made to FIG. 1, which is a schematic diagram showing a wireless communication system provided in an embodiment of the present disclosure. As shown in FIG. 1, the wireless communication system is a communication system based on a cellular mobile communication technology, and may include several UEs 11 and several access devices 12.

The UE 11 may be a device that provides voice and/or data connectivity to a user. The UE 11 may communicate with one or more core networks via a radio access network (RAN). The UE 11 may be an Internet of Things terminal, such as a sensor device, a mobile phone (or referred to as a "cellular" phone) and a computer with an Internet of Things terminal. For example, the UE 11 may be a fixed, portable, pocket-sized, handheld, computer built-in or vehicle-mounted apparatus. For example, the UE 11 may be a station (STA), a subscriber unit, a subscriber station, a mobile station, a mobile, a remote station, an access point, a remote terminal, an access terminal, a user terminal, a user agent, a user device, or a user equipment (UE). Optionally, the UE 11 may also be a device of an unmanned aerial vehicle. Optionally, the UE 11 may also be a vehicle-mounted device, for example, a driving computer with a wireless communication function, or a wireless communication device externally connected with a driving computer. Optionally, the UE 11 may be a roadside device, such as a street lamp, a signal lamp or other roadside devices with a wireless communication function.

The access device 12 may be a network side device in the wireless communication system. The wireless communication system may be a 4th generation mobile communication (4G) system, also referred to as a long term evolution (LTE) system. Optionally, the wireless communication system may also be a 5G system, also referred to as a new radio (NR) system or a 5G NR system. Optionally, the wireless communication system may also be a next generation system of the 5G system. The access network in the 5G system may be referred to as a new generation-radio access network (NG-RAN), or a machine-type communication (MTC) system.

The access device 12 may be an evolved access device (eNB) used in the 4G system. Optionally, the access device 12 may also be an access device (gNB) of a centralized distributed architecture in the 5G system. When the access device 12 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the access device 12 is not limited in the embodiments of the present disclosure.

A wireless connection may be established between the access device 12 and the UE 11 via a wireless radio. In different embodiments, the wireless radio is a wireless radio based on the 4th generation mobile communication network technology (4G) standard. Optionally, the wireless radio is a wireless radio based on the 5th generation mobile communication network technology (5G) standard. For example, the wireless radio is a new radio. Optionally, the wireless radio may also be a wireless radio based on the next generation mobile communication network technology standard of the 5G.

In some embodiments, the wireless communication system may further include a core network element 13.

Several access network elements 12 are connected to the core network element 13, respectively. The core network element 13 may be a core network device in the wireless communication system, for example, the core network element 13 may be a mobility management entity (MME) in an evolved packet core (EPC). Optionally, the core network device may be other core network devices, such as a serving gateway (SGW), a public data network gateway (PGW), a policy and charging rules function (PCRF) or a home subscriber server (HSS). Optionally, the core network element 13 may also be a core network device in 5G, for example, the core network element 13 may be a policy control function (PCF), a session management function (SMF), an access and mobility management function (AMF), a unified data management (UDM) or a user plane function (UPF). The implementation form of the core network element 13 is not limited in the embodiments of the present disclosure.

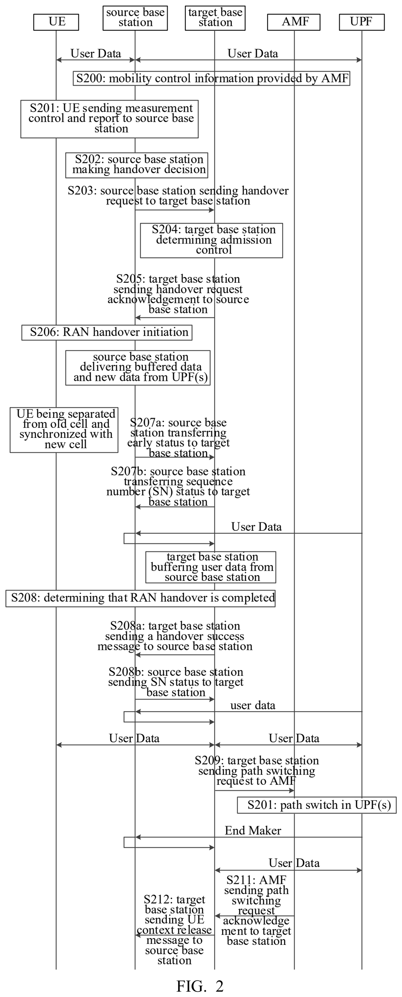

In some embodiments, an operating mechanism of the PDCP layer may be that it is required to send state information of the PDCP layer from a source base station to a target base station in a case that the bearer changes the base station. As illustrated in FIG. 2, the embodiments of the present disclosure provide a method for processing information. The method is performed by communication devices including a UE, the source base station, the target base station, an AMF, and a UPF, and includes the follows steps.

In step S200, the AMF provides mobility control information.

In an optional embodiment, before step S200, there is included: transmitting a user data between the UE and the source base station, and/or transmitting the user data between the source base station and the UPF.

In step S201, the UE sends a measurement control and report to the source base station.

In step S202, the source base station make a handover decision.

In step S203, the source base station sends a handover request to the target base station.

In step S204, the target base station determines admission control.

In step S205, the target base station sends a handover request acknowledgement to the source base station.

In step S206, the RAN initiates the handover.

In an optional embodiment, there is included: the source base station delivering a buffered data and a new data from the UPF.

In an optional embodiment, there is included: the UE detaching from an old cell and synchronizing with a new cell. The old cell may be a cell corresponding to the source base station, and the new cell may be a cell corresponding to the target base station.

In step S207a, the source base station transfers an early status to the target base station.

In step S207b, the source base station transfers a sequence number (SN) status to the target base station.

In an optional embodiment, there is included: the UPF sending the user data to the source base station, and/or the source base station sending the user data to the target base station.

In an optional embodiment, there is included: the target base station buffering the user data from the source base station.

In step S208, it is determined that the RAN handover is completed.

In step S208a, the target base station sends a handover success message to the source base station.

In step S208b, the source base station sends an SN status to the target base station.

In an optional embodiment, there is included: the UPF sending the user data to the source base station, and/or the source base station sending the user data to the target base station.

In another optional embodiment, there is included: transmitting the user data between the UE and the target base station, and transmitting the user data between the target base station and the UPF.

In step S209, the target base station sends a path switching request to the AMF.

In step S210, path switching is performed in UPF.

In an optional embodiment, the UPF sends an end identifier to the source base station, and the source base station sends the end identifier to the target base station.

In step S211, the AMF sends a path switching request acknowledgement to the target base station.

In step S212, the target base station sends a UE context release message to the source base station.

In an optional embodiment, there is included: the target base station sending the UE context release message to the UE.

Steps S201 to S205 may be a handover preparation stage, steps S206 to S207 may be a handover execution stage, and steps S208 to S212 may be a handover completion stage.

According to the above steps S207a and S207b, the source base station sends an SN status transfer message to the target base station for a data radio bearer (DRB) in which a dual active protocol stack (DAPS) is not configured to convey an uplink PDCP SN receiver status and a downlink PDCP SN transmitter status of the DRB (i.e., RLC AM) for which a PDCP status preservation applies. The uplink PDCP SN receiver status includes at least the PDCP SN of a first missing UL PDCP SDU and may include a bit map of the receive status of the out of sequence UL PDCP SDU that the UE needs to retransmit in a target cell, if any. The downlink PDCP SN transmitter status indicates the next PDCP SN that the target gNB shall assign to new PDCP SDUs, not having a PDCP SN yet.

In a downlink direction, the source base station sends the sequence number of the PDCP layer to the target base station, such that the target base station may calculate and/or send a sequence number of a new data packet obtained by the core network at the base station. At this time, a forwarding data packet further includes the data packet that has not received the UE acknowledgement. That is, for the target base station, the target base station is required to send two types of data packets (in the PDCP layer): one is the data packet forwarded from the source base station, and the other is the new data packet received by the core network.

In some embodiments, in an extended reality (XR) service, the data may be distinguished according to the importance of data. For example, the data may be divided into an I-frame and a P-frame. The I frame is a relatively important frame, and the P frame is a relatively unimportant frame. Here, the UE may utilize the I-frame to decode, and the P-frame may not be decoded independently.

In some embodiments, a protocol data unit (PDU) set is introduced, and the PDU set may include multiple PDUs. Sometimes all the data in the PDU set needs to reach a high layer before it may be decoded correctly, and sometimes the data in the PDU set may be decoded correctly without all reaching the high layer.

In some embodiments, the PDU set is composed of one or more PDUs carrying the payload of one unit of information generated at an application level (e.g. a frame or video slice for XRM Services, as used in TR 26.926 [27]). In some implementations, all PDUs in the PDU Set are needed by the application layer to use the corresponding unit of information. In other implementations, the application layer may still recover parts or all of the information unit, when some PDUs are missing.

In some embodiments, the UPF marks the PDU set, places it in a GTP-U header, and transfers it to the RAN.

In some embodiments, the UPF in the GTP-U layer marks the PDU set for a downlink (DL) PDU via a GTP-U header extension. The GTP-U marking is independent from and common to different PDU Set markings between an access stratum (AS) and the UPF. The UPF identifies the PDUs belonging to a PDU set and the following information for each PDU set: information for intra-PDU Set handling (i.e. PDU set integrated processing).

Baseline parameters include at least one of:
a PDU set sequence number (SN) (solutions 7, 8, 9, 11, 12, 14, 19, 20, 21, 22, 23, 50, 53, 55, 56);
an identifier of a start PDU and an end PDU of the PDU set (solutions 11, 12, 15, 18, 21, 22, 55, 56);
a PDU SN within the PDU set (solutions 11, 20, 22, 55, 56);
a numerical count of PDUs within the PDU set (solutions 9, 20, 50) and a PDU set size (in bytes);
an importance or an importance level of the packet set; or
an important PDU SN in the PDU set.

Here, the PDU start may be implicitly indicated via the PDU sequence number.

It may be seen that some baseline parameters of the UPF marking the PDU set may include at least one of: the SN of the PDU set; the SNs of the start PDU and the end PDU (that is, the SN of the first PDU or the last PDU in the PDU set); the numerical count of PDUs included in the PDU set; or the SNs of the PDUs within the PDU set.

In some embodiments, the base station needs to treat data packets in the data packet set as a whole. That is, if a data packet in a data packet set is not successfully sent, it means that other data packets in the data packet set (have not been sent yet) do not need to continue to be sent. In a case of changing the base station, there is a problem of how two different base stations may cooperate to process the same data packet set simultaneously.

For example, a part of the data packet set is transmitted at the original base station and another part is transmitted at the new base station. At this time, for interaction of sequence number status transfer between the base stations, an association relationship between the data packets also needs to be transferred simultaneously, which is convenient for the new base station to process other data packets of the same data packet set. In this case, the burden between the base stations is increased.

However, when the core network is able to consider a dependency between the data packets when sending the data packets, the core network may send the complete data packets in a network element as much as possible, and the above situation does not occur. Some enhancements in the core network are therefore needed.

The embodiments of the present disclosure provide a method for processing information, performed by a first core network element, including: determining a first strategy.

Optionally, the first policy is a policy for sending a first data according to a dependency of the first data.

Optionally, the first policy indicates to send the first data according to the dependency of the first data.

Optionally, the first policy may be a first mechanism or a first mode.

Optionally, the first policy may be a data packet sending policy, a data packet sending mechanism, or a data packet sending mode.

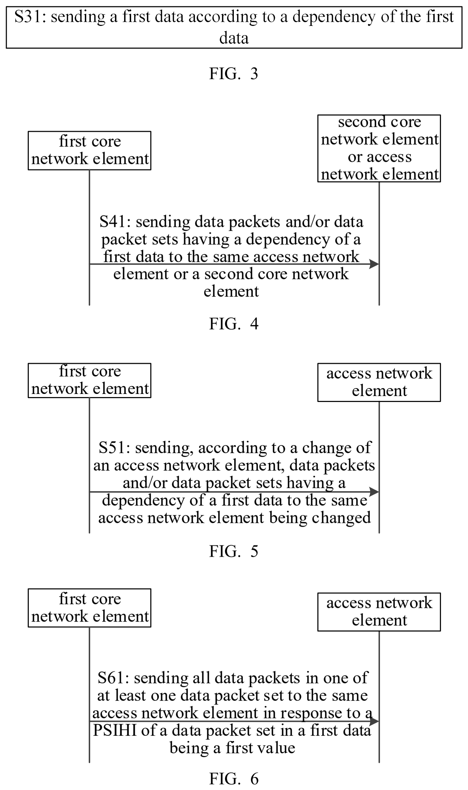

As shown in FIG. 3, the embodiments of the present disclosure provide a method for processing information. The method is performed by a first core network element, and includes:
In step S31, a first data is sent according to a dependency of the first data.

The first core network element of the embodiment of the present disclosure, and an access network element and a second core network element involved in the following embodiments may be, but are not limited to, logical nodes or functions flexibly deployed in the network. For example, the first core network element and the second core network element may both be logical nodes or functions flexibly deployed in the core network. For example, the first core network element and the second core network element may be, but are not limited to, a UPF or an SMF. As another example, the access network element may be a logical node or function flexibly deployed in an access network, for example, the access network element may be, but is not limited to, a base station.

In some embodiments, the base station may be, but not limited to, various types of base stations, which may be, for example, but not limited to, at least one of: a 3G base station, a 4G base station, a 5G base stations, or other evolved base stations.

In some embodiments, the first data includes at least one of:
at least one data packet; or
at least one data packet set, in which each of the at least one data packet set includes one or more data packets.

In some embodiments, the dependency of the first data includes at least one of:
an inter data packet dependency of the first data;
an intra data packet dependency of the at least one data packet set of the first data; or
an inter data packet set dependency of the first data.

Optionally, the dependency of the first data may also include a dependency between a data packet and a data packet of the data packet set in the first data, and/or a dependency between a data packet and a data packet set in the first data.

For example, the first data may include one or more PDUs, and/or one or more PDU sets.

Optionally, the data packet includes a PDU; and the data packet set includes a PDU set.

In the embodiment of the present disclosure, the first core network element sends the first data according to the dependency of the first data, such that the first core network element sends the first data having the dependency, that is, sends a complete data packet and/or a data packet set. In this way, in a case where the communication device, such as a base station or other core network element, receives the first data, it is not required to receive information about the dependency of the data packet and/or the data packet set in the first data, thereby greatly reducing the burden of the communication device such as the base station or other core network element.

Further, in the embodiment of the present disclosure, the first core network element may send the data packet according to the dependency of the data packet, and/or send the data packet set according to the dependency of the data packet set, such that at least one data packet may be completely sent and/or at least one data packet set may be completely sent.

It should be noted that those skilled in the art may understand that the method provided in the embodiment of the present disclosure may be performed alone or together with some methods in the embodiments of the present disclosure or some methods in the related art.

In some embodiments, in step S31, data packets and/or data packet sets having the dependency of the first data are sent to a same access network element or a second core network element; or according to some data packets in the first data received by the first core network element, the some data packets are sent to a second core network element, in which the second core network element is a corresponding network element after a change of the first core network element.

As shown in FIG. 4, the embodiments of the present disclosure provide a method for processing information. The method is performed by a first core network element, and includes the followings steps.

In step S41, data packets and/or data packet sets having a dependency of a first data are sent to the same access network element or a second core network element.

The embodiments of the present disclosure provides a method for processing information. The method is performed by the first core network element, and includes one of:
sending data packets and/or data packet sets not having the dependency of the first data to different access network elements; or
sending data packets and/or data packet sets not having the dependency of the first data to different second core network elements.

The embodiments of the present disclosure provide a method for processing information. The method is performed by the first core network element, and includes: sending the first data to the same access network element according to the dependency of the first data.

For example, data to be transmitted include: a data packet 1 and a data packet 2, a data packet set 1 and a data packet set 2; the data packet set 1 includes a data packet 3 and a data packet 4, and the data packet set 2 includes a data packet 5 and a data packet 6; the data packet 1 has a dependency with the data packet 3 and the data packet 4 in the data packet set 1; the data packet 2 has a dependency with the data packet 5 in the data packet set 2; and thus the first core network element may send the data packet 1 and the data packet 3 and the data packet 4 in the data packet set 1 to the first access network element (i.e., sending to the same access network element), may send the data packet 2 and the data packet 5 in the data packet set 2 to a second access network element, and may send the data packet 6 in the data packet set 2 to a third access network element (i.e., sending to different access network elements). Therefore, the data packets and/or the data packet sets having the dependency may be sent to the same access network element or core network element, and the data packets and/or the data packet sets not having the dependency may be respectively sent to different access network elements or different core network elements, such that the complete sending of the data having the dependency may be ensured.

The embodiments of the present disclosure provide the method for processing information. The method is performed by the first core network element, and includes:
sending, according to some data packets in the first data received by the first core network element, the some data packets to the second core network element, in which the second core network element is a corresponding network element after a change of the first core network element.

For example, in a process that the first core network element sends the first data to the access network element, in a case where the first core network element sends some data packets in the first data to the access network element and the first core network element is changed, the first core network element sends the some data packets to the changed second core network element. For example, the first core network element may be a first UPF, and the second core network element may be a second UPF, and the access network element may be a base station. The first UPF is changed in a transmission of the first data, for example, switching from the first UPF to the second UPF, and thus the first UPF may send the data packet sent in the first data to the second UPF in a forwarding manner. In this way, the complete sending of the data having the dependency may be ensured.

For example, the first core network element may also send the data packets and/or the data packet sets not having the dependency of the first data to the same access network element or the second core network element.

It should be noted that those skilled in the art may understand that the methods provided in the embodiments of the present disclosure may be performed alone or together with some methods in the embodiments of the present disclosure or some methods in the related art.

In some embodiments, sending the data packets and/or the data packet sets having the dependency of the first data to the same access network element includes: sending, according to a change of the access network element, the data packets and/or the data packet sets having the dependency of the first data to the same changed access network element.

As shown in FIG. 5, the embodiments of the present disclosure provide a method for processing information. The method is performed by a first core network element, and includes the following steps.

In step S51, according to a change of an access network element, data packets and/or data packet sets having a dependency of a first data are sent to the same changed access network element.

In some embodiments, the change of the access network element includes one of:
switching the access network element from a first base station to a second base station;
changing a bearer type of the access network element;
adding a secondary base station or changing a secondary base station; or
changing a logical node of a packet data convergence protocol (PDCP) corresponding to the access network element.

The first core network element and the access network element in the embodiments of the present disclosure may be the first core network element and the access network element in the above embodiments.

For example, in the process of sending the first data, in a case where the access network element receiving the first data is changed, for example, the access network element is changed from the first base station to the second base station, the first core network element send the data packets and/or the data packet sets having the dependency of the first data to the second base station. That is, in a case where the first core network element sends the data packets to the access network element, it is required to consider the dependency of the data. It is not possible to send multiple data packets having the dependency to different access network elements separately.

For example, in the process of sending the first data, in a case where the bearer type is successfully converted from a primary base station to the secondary base station, the first core network element sends the first data having the dependency to the secondary base station. Optionally, the primary base station and the secondary base station may be the access network elements in the above embodiments.

For example, in the process of sending the first data, in a case where the secondary base station is successfully added to the network, the first core network element sends the first data with the dependency to the added secondary base station.

In this way, in the embodiments of the present disclosure, in a scenario that the access network element, i.e., the network element that receives data, is changed, for example, in a scenario that the access network element is switched, the secondary base station is added or modified, or in a scenario that the bearer type corresponding to the access network element is changed, the first data may be sent to different network elements according to the dependency of the first data, thereby implementing the complete sending of the data. That is, in a case where the first core network element sends the data packets to the access network element, it is required to consider the dependency of the data. The multiple data packets having the dependency cannot be sent to different network elements separately.

It should be noted that those skilled in the art may understand that the methods provided in the embodiments of the present disclosure may be performed alone or together with some methods in the embodiments of the present disclosure or some methods in the related art.

In some embodiments, the first data includes the at least one data packet set, and sending the data packets and/or the data packet sets having the dependency of the first data to the same access network element includes: sending all data packets in one of the at least one data packet set to the same access network element in response to a protocol data unit (PDU) set integrated handling indication (PSIHI) of the data packet set in the first data being a first value.

As shown in FIG. 6, the embodiments of the present disclosure provide a method for processing information. The method is performed by a first core network element, and includes the following steps.

In step S61, all data packets in one of at least one data packet set are sent to the same access network element in response to a PSIHI of a data packet set in a first data being a first value.

Optionally, in a case where the PSIHI of the data packet set is the first value, it indicates that all data packets in the data packet set need to be received. For example, the first value may be one or more bits, such as the first value is "1".

Optionally, in a case where the PSIHI of the data packet set is a second value, it indicates that it is not needed to receive all data packets in the data packet set. In the embodiments of the present disclosure, the first core network element is not required to send the first data according to the dependency of the first data, that is, it is not required to send the data packet set according to a dependency between PDUs in the data packet set. For example, the second value may be one or more bits, such as the second value is "0".

Optionally, the data packet set includes a PDU set, and the data packet includes a PDU.

Optionally, the PSIHI is attribute information of Quality of Service (QoS). For example, the PSIHI is one of 5G QoS Identities (5QI).

In embodiments of the present disclosure, the first core network element determines whether to send the first data according to the dependency of the first data according to the value of PSIHI in the data packet set, such that the appropriate sending mode of the first data can be accurately selected.

The embodiments of the present disclosure provide a method for processing information. The method is performed by a first core network element, and includes: sending, according to a packet loss policy, the data packets and/or the data packet sets having the dependency of the first data to the same access network element.

Optionally, the packet loss strategy includes at least one of:
sending the first data according to the dependency of the first data based on the PSIHI being the first value;
not sending the first data according to the dependency of the first data based on PSIHI being the second value.

Optionally, the dependency of the first data indicated in a case where the PSIHI is the first value is higher than that indicated in a case where PSIHI is the second value. Optionally, the first data includes at least one PDU set.

In this way, the first core network element can also select the appropriate way for sending the first data according to the packet loss strategy, for example, the first data having a relatively strong dependency may be completely sent, or the first data having a relatively weak dependency may not be completely sent.

It should be noted that those skilled in the art may understand that the methods provided in the embodiments of the present disclosure may be performed alone or together with some methods in the embodiments of the present disclosure or some methods in the related art.

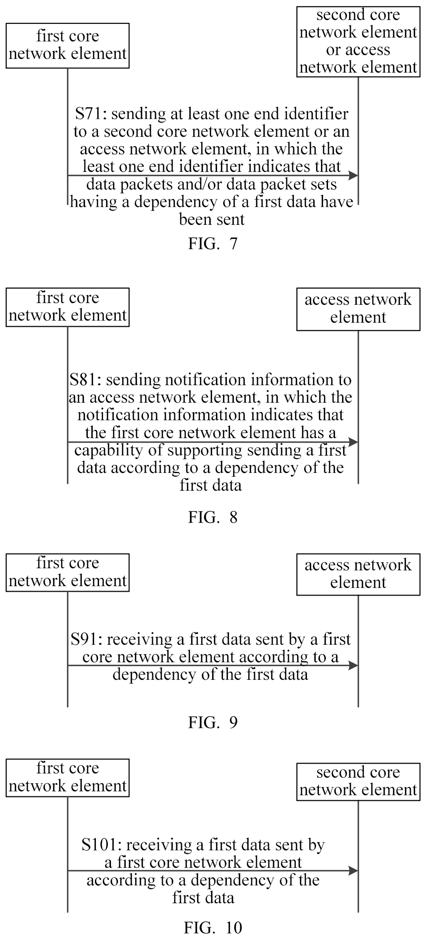

As shown in FIG. 7, the embodiments of the present disclosure provide a method for processing information. The method is performed by a first core network element, and includes the following steps.

In step S71, at least one end identifier is sent to a second core network element or an access network element, in which the least one end identifier indicates that data packets and/or data packet sets having a dependency of a first data have been sent.

In some embodiments of the present disclosure, the first core network element, the second core network element and the access network element are respectively the first core network element, the second core network element and the access network element in the above embodiments. The first data is the first data in the above embodiments. The dependency of the first data is the dependency of the first data in the above embodiments.

Optionally, after step S31, step S71 is performed.

Optionally, an end identifier corresponds to a complete sending of the first data.

Optionally, the end identifier may be an endmaker indication or an endmaker.

For example, after the first core network element completely sends a data packet and/or a data packet set having the dependency to the access network element, the first core network element sends the end identifier to the access network element. Optionally, after the first core network element completely sends other data packets and/or data packet sets having the dependency to the access network element, the first core network element may also send one end identifier to the access network element.

For example, after the first core network element completely sends a data packet and/or a data packet set having the dependency to the second core network element, the first core network element sends the end identifier to the second core network element. Optionally, after the first core network element completely sends other data packets and/or data packet sets having the dependency to the second core network element, the first core network element may also send one end identifier to the second core network element.

In embodiments of the present disclosure, the first core network element may send a complete first data to the access network element or the second core network element and then send the end identifier, such that the access network element or the second core network element knows that the complete first data has been received.

The embodiments of the present disclosure provide a method for processing information. The method is performed by the first core network element, and includes: sending one end identifier after each PDU set have been sent to the second core network element or the access network element, in which the end identifier indicates that the corresponding PDU set has been sent. In this way, the complete sending of the PDU set can be ensured, and the second core network element or the access network element can also be informed that each PDU set has been sent.

In some embodiments, before step S71, the method includes: receiving indication information sent by a base station, in which the indication information indicates that an access network element accessed by a UE has been changed.

The embodiments of the present disclosure provide a method for processing information. The method is performed by the first core network element, and includes: receiving the indication information sent by the base station, in which the indication information indicates that the access network element accessed by the UE has been changed. Optionally, the access network element is the base station.

For example, the access network element has been changed from the first base station to the second base station; the first core network element receives the indication information of the second base station, and the indication information indicates that the base station accessed by the UE has been changed from the first base station to the second base station; and the first core network element sends the end identifier to the second base station. Optionally, the first core network element may also receive the indication information sent by the first base station, and the indication information is sent before the first base station has been changed to the second base station.

In the embodiments of the present disclosure, in a case where the access network element accessed by the UE has been changed, for example, from the first base station to the second base station, the second base station can inform the first core network element that the access network accessed by the UE has been changed, such that the first core network element can send the end identifier to the access network element for complete sending of the first data.

It should be noted that those skilled in the art may understand that the methods provided in the embodiments of the present disclosure may be performed alone or together with some methods in the embodiments of the present disclosure or some methods in the related art.

As shown in FIG. 8, the embodiments of the present disclosure provide a method for processing information. The method is performed by a first core network element, and includes the following steps.

In step S81, notification information is sent to an access network element, in which the notification information indicates that the first core network element has a capability of supporting sending a first data according to a dependency of the first data.

Optionally, the notification information indicates that the first core network element has a capability of supporting a first policy.

In some embodiments of the present disclosure, the first core network element and the access network element are respectively the first core network element and the access network element in the above embodiments; the first data is the first data in the above embodiments; and the dependency of the first data is the dependency of the first data in the above embodiments.

In the embodiments of the present disclosure, the notification information may be sent to the access network element via the first core network element, to inform the access network element that the first core network element has the capability of supporting sending the first data according to the dependency of the first data. This is beneficial for the access network element to avoid sending auxiliary information about packet loss to a target base station in a case of forwarding the first data.

In some embodiments, the first core network element sends the notification information to the second core network element. In this way, the first core network element may also inform other core network elements that the first core network element has the capability of supporting sending the first data according to the dependency of the first data.

It should be noted that those skilled in the art may understand that the methods provided in the embodiments of the present disclosure may be performed alone or together with some methods in the embodiments of the present disclosure or some methods in the related art.

The following methods for processing information are performed by an access network element, which is similar to the descriptions of the methods for processing information performed by the first core network element. Moreover, for the technical details not disclosed in the embodiments of the method for processing information performed by the access network element, please refer to the descriptions of the examples of the methods for processing information performed by the first core network element, and will not be described in detail here.

As shown in FIG. 9, the embodiments of the present disclosure provide a method for processing information. The method is performed by an access network element, including the following steps.

In step S91, a first data sent by a first core network element according to a dependency of the first data is received.

In some embodiments of the present disclosure, the first core network element and the access network element are respectively the first core network element and the access network element in the above embodiments; the first data is the first data in the above embodiments; and the dependency of the first data is the dependency of the first data in the above embodiments.

For example, the first core network element is a UPF or an SMF. The access network element is a base station.

For example, the first data includes at least one of:
at least one data packet; or
at least one data packet set, in which each of the at least one data packet set includes one or more data packets.

For example, the dependency of the first data includes at least one of:
an inter data packet dependency of the first data;
an intra data packet dependency of the at least one data packet set of the first data; or
an inter data packet set dependency of the first data.

In some embodiments, receiving the first data sent by the first core network element according to the dependency of the first data includes: receiving data packets and/or data packet sets having the dependency of the first data sent by the first core network element.

Optionally, the first data having the dependency is sent by the first core network element according to a change of the access network element or according to a packet loss policy.

Optionally, the data packets and/or the data packet sets having the dependency are sent according to the change of the access network element.

The embodiments of the present disclosure provide a method for processing information. The method is performed by the access network element, and includes: receiving the first data sent by the first core network element according to the dependency of the first data.

In some embodiments, the change of the access network element includes one of:
switching the access network element from a first base station to a second base station;
changing a bearer type of the access network element;
adding a secondary base station or changing a secondary base station; or
changing a logical node of a PDCP corresponding to the access network element.

The embodiments of the present disclosure provide a method for processing information. The method is performed by the access network element, and includes: receiving at least one end identifier sent by the first core network element, in which the least one end identifier indicates that the data packets and/or the data packet sets having the dependency of the first data have been sent.

The embodiments of the present disclosure provide a method for processing information. The method is performed by the access network element, and includes: receiving notification information sent by the first core network element, in which the notification information indicates that the first core network element has a capability of supporting sending the first data according to the dependency of the first data.

For details of the above embodiments, please refer to the descriptions for the first core network element side, which are not be repeated here.

It should be noted that those skilled in the art may understand that the methods provided in the embodiments of the present disclosure may be performed alone or together with some methods in the embodiments of the present disclosure or some methods in the related art.

The following methods for processing information are performed by a second core network element, which is similar to the above descriptions of the methods for processing information performed by the first core network element and/or the access network element. For the technical details not disclosed in the embodiments of the methods for processing information performed by the second core network element, please refer to the descriptions of the examples of the methods for processing information performed by the first core network element and/or the access network element, and will not be described in detail here.

As shown in FIG. 10, the embodiments of the present disclosure provide a method for processing information. The method is performed by a second core network element, and includes the following steps.

In step S101, a first data sent by a first core network element according to a dependency of the first data is received.

In some embodiments of the present disclosure, the first core network element and the access network element are respectively the first core network element and the access network element in the above embodiments; the first data is the first data in the above embodiments; and the dependency of the first data is the dependency of the first data in the above embodiments.

For example, the first core network element is a UPF or an SMF. The access network element is a base station.

For example, the first data includes at least one of:
at least one data packet; or
at least one data packet set, in which each of the at least one data packet set includes one or more data packets.

For example, the dependency of the first data includes at least one of:
an inter data packet dependency of the first data;
an intra data packet dependency of the at least one data packet set of the first data; or
an inter data packet set dependency of the first data.

In some embodiments, receiving the first data sent by the first core network element according to the dependency of the first data includes: receiving data packets and/or data packet sets sent by the first core network element that have the dependency of the first data.

The embodiments of the present disclosure provide a method for processing information. The method is performed by the second core network element, and includes: receiving at least one end identifier sent by the first core network element, in which the least one end identifier indicates that the data packets and/or the data packet sets having the dependency of the first data have been sent.

For details of the above embodiments, please refer to the descriptions for the first core network side and/or the access network element side, which are not repeated here.

It should be noted that those skilled in the art may understand that the methods provided in the embodiments of the present disclosure may be performed alone or together with some methods in the embodiments of the present disclosure or some methods in the related art.

In order to further explain any embodiment of the present disclosure, several specific embodiments are provide below.

### Example 1

The method for processing information according to the embodiments of the present disclosure includes the following steps.

In some embodiments, a mechanism for a core network element to send data packets according to a dependency between the data packets is provided. Optionally, the data packet may be the first data in the aforementioned embodiments.

Optionally, the core network element is a UPF or an SMF. Optionally, the core network element is the first core network element in the aforementioned embodiments.

Optionally, the data packet may include at least one data packet or a data packet set composed of at least one data packet.

Optionally, the dependency between the data packets includes an intra packet set dependency of the data packet set, and may also include an inter packet set dependency of the data packet sets.

In some embodiments, sending the data packets by the core network element according to the dependency between the data packets includes: sending one or more data packets in the data packet set having an association relationship (or dependency) or sending one or more data packets in one or more data packet sets having an association relationship (or dependency) to the same target network element. Optionally, the target network element may be the access network element or the second core network element in the aforementioned embodiments.

Optionally, the data packets having the association relationship are sent in the same network element, that is, the data packets not having the association relationship are sent to different network elements separately.

Optionally, the target network element may be a base station of the access network or other network elements of the core network.

Optionally, in a case where the core network element changes during data transmission (switching from the first core network element to the second core network element, for example, UPF change occurs), a data forwarding manner may be adopted to ensure complete transmission of the data having the dependency. For example, in a case where the first core network element receives some data packets of a data packet set and does not wait for an end indication of the data packet set, it means that the data packet set is not completely received, and thus the data in the incompletely received data packet set may be forwarded to the second core network element, and the second core network element continues to send the data packet set to the access network element.

In some embodiments, the core network element sending the data packets to the same target network element according to the dependency between the data packets includes the requirement to ensure the integrity of the data packets in a case where the target network element changes (switching from the first base station to the second base station). Optionally, the target network element is the access network element or the second core network element in the aforementioned embodiments.

Optionally, the change of the target network element in the data transmission process includes scenarios such as handover, SN addition/modification, and the like.

Optionally, the change of the target network element in the data transmission process includes a scenario of bearer type change, specifically (some examples are given below):

Upon evolved universal terrestrial radio access (E-UTRA) to a new radio (NR) dual connectivity (EN-DC) specific activities, for an evolved radio access bearer (E-RAB) for which the bearer type change from MN terminated bearer to SN terminated bearer, or the bearer type change from SN terminated bearer to MN terminated bearer is performed;

For multi-RAT dual connectivity (MR-DC) with a 5G core (5GC), user data forwarding may be performed between NG-RAN nodes whenever a logical node hosting a PDCP entity changes;
for an SN change involving full configuration;
for a mobility scenario which involve more than two RAN nodes; and
for the MR-DC with the 5GC, offloading of QoS flows within one PDU session may be performed between the NG-RAN nodes.

The change of the target network element in the data transmission process means that for the core network element, a data transmission channel needs to be switched from the changed target network element to the target network element after the change of the target network element.

In some embodiments, the core network element sending the data packets to the same target network element according to the dependency between the data packets further includes additional qualifications (such as a packet loss policy). Optionally, the target network element is the access network element in the aforementioned embodiments.

Optionally, this operation only needs to be performed if a PHISI is set to 1 in a Qos attribute of the data packet. For example, the PHISI indicates that all data packets in one packet set need to be received at an application layer simultaneously, which means that the data packets in the packet set are strongly correlated.

Optionally, if the PHISI is set to 0 in the Qos attribute of the data packet, it is not needed to perform the operation according to the dependency. The dependency refers to the dependency between the data packets in the aforementioned embodiments.

Optionally, the PSIHI indicates whether all PDUs of a PDU set are needed by an application layer for the usage of PDU set. When the PSIHI is set for a QoS flow, as soon as one PDU of a PDU set is known to be lost, the remaining PDUs of that PDU set may be considered as no longer needed by the application and may be subject to a discard operation.

In some embodiments, the mechanism that the core network element sends the data packets according to the dependency between the data packets may also take into account the dependency between the data packets in a case of sending an endmaker indication.

Optionally, in a case where the core network element needs to send the endmaker indication to the target network element, it is required to consider that one or more data packets in the data packet set having the association relationship or one or more data packets in the one or more data packet sets having the association relationship are completely sent to the same target network element before sending an endmaker. Optionally, the endmaker will not be sent between the data packets having the dependency or before the data packets having the dependency are completely sent. Optionally, the core network element is the UPF, and the target network element is the access network element in the aforementioned embodiments, such as the base station. Optionally, the core network element is the SMF, and the target network element is the second core network element in the aforementioned embodiments, such as the UPF.

In some embodiments, since the target network element is changed (such as handover, etc.) in the data transmission process, this means that for the core network element, the data transmission channel needs to be switched to the changed target network element (e.g., switched from the first base station to the second base station) after the target network element is changed. At this time, the sending of the endmaker is involved, that is, the core network element first completely sends one or more data packets in the one or more data packet sets having the dependency to the same target network element (such as the first base station), and then sends the endmaker to the first base station. After that, data is continued to be sent to the second base station.

Optionally, there may be one or more endmakers.

Optionally, the core network element may actually receive an indication from the base station in a case of sending the endmaker, for example, the UPF receives an indication that the UE has accessed a new base station. Optionally, the indication may be the indication information in the aforementioned embodiments. Optionally, the example may be expressed as follows.

A target gNB sends a path switch request message to an AMF to trigger the 5GC to switch a DL data path towards the target gNB and to establish an NG-C interface instance towards the target gNB. The 5GC switches the DL data path towards the target gNB. The UPF sends one or more "end marker" packets on the old path to a source gNB per PDU session/tunnel and then may release any U-plane/Transport Network Layer (TNL) resources towards the source gNB.

In some embodiments, the core network element may notify the base station of its capability of supporting sending the data pocket according to the dependency of the data pocket. In this way, the base station does not need to notify the target base station of the auxiliary information of packet loss when the data packet is forwarded.

For details of the above embodiments, please refer to the descriptions of the first core network element side, the second core network element side, and/or the access network element side, which will not repeated here.

It should be noted that those skilled in the art may understand that the methods provided in the embodiments of the present disclosure may be performed alone or together with some methods in the embodiments of the present disclosure or some methods in the related art.

### Example 2

The embodiment of the present disclosure provide a system for processing information, including:
a first core network element configured to send a first data according to a dependency of the first data; and
an access network element configured to receive the first data.

In some embodiments, the first core network element is configured to send data packets and/or data packet sets having the dependency of the first data to the same access network element.

In some embodiments, the first core network element is configured to send at least one end identifier to the access network element, in which the least one end identifier indicates that the data packets and/or the data packet sets having the dependency of the first data have been sent.

In some embodiments, the first core network element is configured to send notification information to the access network element, in which the notification information indicates that the first core network element has a capability of supporting sending the first data according to the dependency of the first data.

For details of the above embodiments, please refer to the descriptions of the first core network element side, the second core network element side, and/or the access network element side, which will not repeated here.

It should be noted that those skilled in the art may understand that the methods provided in the embodiments of the present disclosure may be performed alone or together with some methods in the embodiments of the present disclosure or some methods in the related art.

### Example 3

The embodiments of the present disclosure provide a system for processing information, including:
a first core network element configured to send a first data according to a dependency of the first data; and
a second core network element configured to receive the first data.

In some embodiments, the first core network element is configured to send data packets and/or data packet sets having the dependency of the first data to the same second core network element.

In some embodiments, the first core network element is configured to send at least one end identifier to the second core network element, in which the least one end identifier indicates that the data packets and/or the data packet sets having the dependency of the first data have been sent.

For details of the above embodiments, please refer to the descriptions of the first core network element side, the second core network element side, and/or the access network element side, which will not repeated here.

It should be noted that those skilled in the art may understand that the methods provided in the embodiments of the present disclosure may be performed alone or together with some methods in the embodiments of the present disclosure or some methods in the related art.

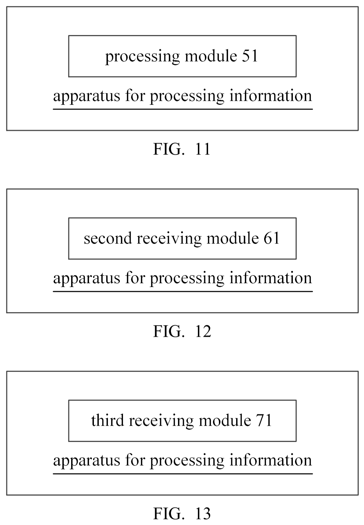

As shown in FIG. 11, the embodiments of the present disclosure provide an apparatus for processing information, including:
a sending module 51, configured to send a first data according to a dependency of the first data.

The apparatus for processing information provided in embodiments of the present disclosure may be a first core network element. Optionally, the first core network element is a UPF or an SMF.

In some embodiments, the first data includes at least one of:
at least one data packet; or
at least one data packet set, in which each of the at least one data packet set includes one or more data packets.

In some embodiments, the dependency of the first data includes at least one of:
an inter data packet dependency of the first data;
an intra data packet dependency of the at least one data packet set of the first data; or
an inter data packet set dependency of the first data.

The embodiments of the present disclosure provide an apparatus for processing information, including: a sending module 51, configured to send data packets and/or data packet sets having the dependency of the first data to the same access network element or a second core network element; or
a sending module 51, configured to send, according to some data packets in the first data received by the first core network element, the some data packets to a second core network element, in which the second core network element is a corresponding network element after a change of the first core network element.

The embodiments of the present disclosure provide an apparatus for processing information, including: a sending module 51, configured to send data packets and/or data packet sets not having the dependency of the first data to different second core network elements or access network elements.

The embodiments of the present disclosure provide an apparatus for processing information, including: a sending module 51, configured to send, according to a change of the access network element, the data packets and/or the data packet sets having the dependency of the first data to the same changed access network element.

In some embodiments, the change of the access network element includes one of:
switching the access network element from a first base station to a second base station;
changing a bearer type of the access network element;
adding a secondary base station or changing a secondary base station; or
changing a logical node of a PDCP corresponding to the access network element.

The embodiments of the present disclosure provide an apparatus for processing information, including: a sending module 51, configured to send all data packets in one of the at least one data packet set to the same access network element in response to a PSIHI of the data packet set in the first data being a first value.

The embodiments of the present disclosure provide an apparatus for processing information, including: a sending module 51, configured to send at least one end identifier to the second core network element or the access network element, in which the least one end identifier indicates that the data packets and/or the data packet sets having the dependency of the first data have been sent.

The embodiments of the present disclosure provide an apparatus for processing information, including: a first receiving module, configured to receive indication information sent by a base station, in which the indication information indicates that an access network element accessed by a UE has been changed.

The embodiments of the present disclosure provide an apparatus for processing information, including: a sending module 51, configured to send notification information to the access network element, in which the notification information indicates that the first core network element has a capability of supporting sending the first data according to the dependency of the first data.

In some embodiments, the second core network element includes one of: a UPF or an SMF; and/or the access network element is a base station.

As shown in FIG. 12, the embodiments of the present disclosure provide an apparatus for processing information, including:
a second receiving module 61 configured to receive a first data sent by a first core network element according to a dependency of the first data.

The apparatus for processing information provided in the embodiments of the present disclosure may be an access network element. Optionally, the access network element is a base station.

In some embodiments, the first data includes at least one of:
at least one data packet; or
at least one data packet set, in which each of the at least one data packet set includes one or more data packets.
In some embodiments, the dependency of the first data includes at least one of:
an inter data packet dependency of the first data;
an intra data packet dependency of the at least one data packet set of the first data; or
an inter data packet set dependency of the first data.

The embodiments of the present disclosure provide an apparatus for processing information, including: a second receiving module 61, configured to receive data packets and/or data packet sets having the dependency of the first data sent by the first core network element.

In some embodiments, the first data having the dependency is sent by the first core network element according to a change of the access network element.

In some embodiments, the change of the access network element includes one of:
switching the access network element from a first base station to a second base station;
changing a bearer type of the access network element;
adding a secondary base station or changing a secondary base station; or
changing a logical node of a PDCP corresponding to the access network element.

The embodiments of the present disclosure provide an apparatus for processing information, including: a second receiving module 61, configured to receive at least one end identifier sent by the first core network element, in which the least one end identifier indicates that the data packets and/or the data packet sets having the dependency of the first data have been sent.

The embodiments of the present disclosure provide an apparatus for processing information, including: a second receiving module 61, configured to receive notification information sent by the first core network element, in which the notification information indicates that the first core network element has a capability of supporting sending the first data according to the dependency of the first data.

In some embodiments, the first core network element includes one of: a UPF or an SMF.

As shown in FIG. 13, the embodiments of the present disclosure provide an apparatus for processing information, including:
a third receiving module 71 configured to receive a first data sent by a first core network element according to a dependency of the first data.

The apparatus for processing information provided in the embodiments of the present disclosure may be a second core network element. Optionally, the second core network element is a UPF or an SMF.

In some embodiments, the first data includes at least one of:
at least one data packet; or
at least one data packet set, in which each of the at least one data packet set includes one or more data packets.

In some embodiments, the dependency of the first data includes at least one of:
an inter data packet dependency of the first data;
an intra data packet dependency of the at least one data packet set of the first data; or
an inter data packet set dependency of the first data.

The embodiments of the present disclosure provide an apparatus for processing information, including: a third receiving module 71, configured to receive data packets and/or data packet sets having the dependency of the first data sent by the first core network element.

In some embodiments, the change of the access network element includes one of:
switching the access network element from a first base station to a second base station;
changing a bearer type of the access network element;
adding a secondary base station or changing a secondary base station; or
changing a logical node of a PDCP corresponding to the access network element.

The embodiments of the present disclosure provide an apparatus for processing information, including: a third receiving module 71 configured to receive at least one end identifier sent by the first core network element, in which the least one end identifier indicates that the data packets and/or the data packet sets having the dependency of the first data have been sent.

In some embodiments, the first core network element includes one of: a UPF or an SMF.

It should be noted that those skilled in the art may understand that the apparatus provided in the embodiments of the present disclosure may be performed alone or together with some apparatus in the embodiments of the present disclosure or some apparatus in the related art.

With respect to the devices in the above embodiments, the specific manners for performing operations for individual modules therein have been described in detail in the embodiments regarding the methods, which will not be elaborated herein.

The embodiments of the present disclosure provide a communication device including a processor, a transceiver, a memory, and executable programs stored in the memory and capable of being run by the processor, in which the processor executes the method for processing information as provided above when running the executable programs.

In some embodiments, the processor may include various types of storage media that are non-transitory computer storage media capable of continuing to memorize information stored thereon after the communication device is powered down.

In some embodiments, the communication device includes a first core network element or a second core network element or a base station.

The processor may be connected to the memory via a bus and the like for reading executable programs stored on the memory, for example, at least one of the methods shown in FIGS. 3 to 10.

The embodiments of the present disclosure provide a computer storage medium having stored therein executable programs that, when executed by a processor, cause the method for processing information provided above to be implemented, for example, at least one of the methods shown in FIGS. 3 to 10.

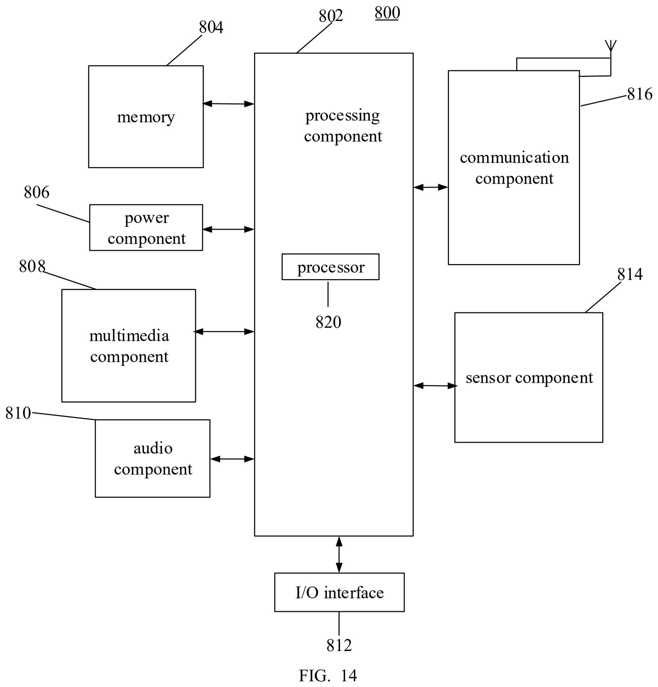

FIG. 14 is a block diagram illustrating a UE 800 according to an example embodiment. For example, the UE 800 may be a mobile phone, a computer, a digital broadcast terminal, a messaging device, a game console, a tablet device, a medical device, a fitness device, a personal digital assistant, or the like.

Referring to FIG. 14, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in location of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 may access a wireless network based on a communication standard, such as Wi-Fi, 2G, or 3G, or a combination thereof. In an example embodiment, the communication component 816 receives a broadcast signal or broadcast associated information from an external broadcast management system via a broadcast channel. In an example embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an example embodiment, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an example embodiment, there is also provided a non-transitory computer readable storage medium including instructions, such as included in the memory 804, executable by the processor 820 in the UE 800, for completing the above-mentioned methods. For example, the non-transitory computer-readable storage medium may be a ROM, a random access memory (RAM), a CD-ROM, a magnetic tape, a floppy disc, an optical data storage device, and the like.

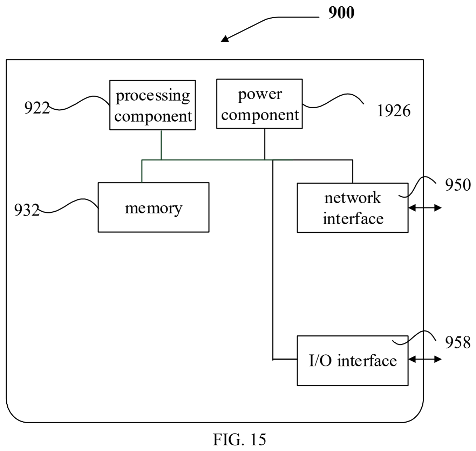

As shown in FIG. 15, the embodiments of the present disclosure show a structure of a communication device. For example, the communication device 900 may be provided as a network side device. The communication device may be various network elements such as the aforementioned access network element and/or network function. The communication device may be the first core network element or the second core network element or the base station in the aforementioned embodiments.

Referring to FIG. 15, the communication device 900 includes a processing component 922 and a memory resource represented by a memory 932. The processing component 922 may further include one or more processors. The memory 932 is configured to store instructions executable by the processing component 922, such as an application program. The application program stored in the memory 932 may include one or more modules each corresponding to a set of instructions. In addition, the processing component 922 is configured to execute the instructions to perform any of the aforementioned methods applied to the access device.

The communication device 900 further includes a power component 926 configured to perform a power management on the communication device 900, a wired or wireless network interface 950 configured to connect the communication device 900 to the network, and an input/output (I/O) interface 958. The communication device 900 may operate an operating system stored in the memory 932, such as Windows Server^{™}, Mac OS X^{™}, Unix^{™}, Linux^{™}, Free BSD^{™}, or the like.

In the absence of contradiction, each step in a certain embodiment or example may be implemented as an independent embodiment, and the steps may be arbitrarily combined. For example, a solution after removing some steps in a certain embodiment or example may also be implemented as an independent embodiment, and the order of the steps in a certain embodiment or example may be arbitrarily exchanged. In addition, the optional methods or optional examples in a certain embodiment or example may be arbitrarily combined. Furthermore, the various embodiments or examples may be arbitrarily combined. For example, some or all steps of different embodiments or examples may be arbitrarily combined, and a certain embodiment or example may be arbitrarily combined with the optional methods or optional examples of other embodiments or examples.

Other embodiments of the present disclosure will be apparent to those skilled in the art from consideration of the specification and practice of the present disclosure disclosed here. The present disclosure is intended to cover any variations, uses, or adaptations of the embodiments of the present disclosure following the general principles thereof and including common knowledge or conventional technical means known in the art but not disclosed in the present disclosure. The specification and examples should be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for processing information, performed by a first core network element, comprising:
sending a first data according to a dependency of the first data.

2. The method of claim 1, wherein the first data comprises at least one of:
at least one data packet; or
at least one data packet set, wherein each of the at least one data packet set comprises one or more data packets.

3. The method of claim 1 or 2, wherein the dependency of the first data comprises at least one of:
an inter data packet dependency of the first data;
an intra data packet dependency of the at least one data packet set of the first data; or
an inter data packet set dependency of the first data.

4. The method of any one of claims 1 to 3, wherein sending the first data according to the dependency of the first data comprises one of:
sending data packets and/or data packet sets having the dependency of the first data to a same access network element or a second core network element; or
sending, according to some data packets in the first data received by the first core network element, the some data packets to a second core network element, wherein the second core network element is a corresponding network element after a change of the first core network element.

5. The method of any one of claims 1 to 4, further comprising:
sending data packets and/or data packet sets not having the dependency of the first data to different second core network elements or access network elements.

6. The method of claim 4, wherein sending the data packets and/or the data packet sets having the dependency of the first data to the same access network element comprises:
sending, according to a change of the access network element, the data packets and/or the data packet sets having the dependency of the first data to a same changed access network element.

7. The method of claim 6, wherein the change of the access network element comprises one of:
switching the access network element from a first base station to a second base station;
changing a bearer type of the access network element;
adding a secondary base station or changing a secondary base station; or
changing a logical node of a packet data convergence protocol (PDCP) corresponding to the access network element.

8. The method of any one of claims 4 to 7, wherein the first data comprises the at least one data packet set, and sending the data packets and/or the data packet sets having the dependency of the first data to the same access network element comprises:
sending all data packets in one of the at least one data packet set to the same access network element in response to a protocol data unit (PDU) set integrated handling indication (PSIHI) of the data packet set in the first data being a first value.

9. The method of any one of claims 1 to 8, wherein after sending the first data according to the first data dependency, the method further comprises:
sending at least one end identifier to the second core network element or the access network element, wherein the least one end identifier indicates that the data packets and/or the data packet sets having the dependency of the first data have been sent.

10. The method of claim 9, wherein before sending the at least one end identifier to the second core network element or the access network element, the method further comprises:
receiving indication information sent by a base station, wherein the indication information indicates that an access network element accessed by a user equipment (UE) has been changed.

11. The method of any of claims 1 to 10, further comprising:
sending notification information to the access network element, wherein the notification information indicates that the first core network element has a capability of supporting sending the first data according to the dependency of the first data.

12. The method of claim 1, wherein the first core network element comprises one of: a user plane function (UPF) or a session management function (SMF).

13. The method of claim 4, wherein the second core network element comprises one of: a UPF or an SMF; and/or
the access network element is a base station.

14. A method for processing information, performed by an access network element, comprising:
receiving a first data sent by a first core network element according to a dependency of the first data.

15. The method of claim 14, wherein the first data comprises at least one of:
at least one data packet; or
at least one data packet set, wherein each of the at least one data packet set comprises one or more data packets.

16. The method of claim 14 or 15, wherein the dependency of the first data comprises at least one of:
an inter data packet dependency of the first data;
an intra data packet dependency of the at least one data packet set of the first data; or
an inter data packet set dependency of the first data.

17. The method of claim 15 or 16, wherein receiving the first data sent by the first core network element according to the dependency of the first data comprises:
receiving data packets and/or data packet sets having the dependency of the first data sent by the first core network element.

18. The method of any one of claims 14 to 17, wherein the first data having the dependency is sent by the first core network element according to a change of the access network element.

19. The method of claim 18, wherein the change of the access network element comprises one of:
switching the access network element from a first base station to a second base station;
changing a bearer type of the access network element;
adding a secondary base station or changing a secondary base station; or
changing a logical node of a packet data convergence protocol (PDCP) corresponding to the access network element.

20. The method of any one of claims 14 to 19, further comprising:
receiving at least one end identifier sent by the first core network element, wherein the least one end identifier indicates that the data packets and/or the data packet sets having the dependency of the first data have been sent.

21. The method of any one of claims 14 to 20, further comprising:
receiving notification information sent by the first core network element, wherein the notification information indicates that the first core network element has a capability of supporting sending the first data according to the dependency of the first data.

22. The method of claim 14, wherein the first core network element comprises one of: a user plane function (UPF) or a session management function (SMF); and/or
the access network element is a base station.

23. A method for processing information, performed by a second core network element, comprising:
receiving a first data sent by a first core network element according to a dependency of the first data.

24. The method of claim 23, comprising:
receiving at least one end identifier sent by the first core network element, wherein the least one end identifier indicates that data packets and/or data packet sets having the dependency of the first data have been sent.

25. An apparatus for processing information, comprising:
a sending module configured to send a first data according to a dependency of the first data.

26. An apparatus for processing information, comprising:
a second receiving module configured to receive a first data sent by a first core network element according to a dependency of the first data.

27. A system for processing information, comprising:
a first core network element configured to send a first data according to a dependency of the first data; and
an access network element configured to receive the first data.

28. A system for processing information, comprising:
a first core network element configured to send a first data according to a dependency of the first data; and
a second core network element configured to receive the first data.

29. A communication device, comprising:
a transceiver;
a memory; and
executable programs stored in the memory and capable of being run by a processor, wherein the processor executes the method for processing information of any one of claims 1 to 13, any one of claims 14 to 22, or any one of claims 23 to 24 when running the executable programs.

30. A computer storage medium having stored therein executable programs that, when executed by a processor, cause the method for processing information of any one of claims 1 to 13, any one of claims 14 to 22, or any one of claims 23 to 24 to be implemented.
